# EUROPEAN PATENT APPLICATION

(11) **EP 1 391 823 A2**
(43) Date of publication of application: **25.02.2004**
(21) Application number: 03016965.0
(22) Date of filing: 25.07.2003
(51) Int. Cl.: G06F 11/00, G06F 11/14

(54) **Control device for electrical appliances and method of writing application program into control device**

(30) Priority: 01.08.2002 JP 2002224767
(71) Applicant: ALPS ELECTRIC CO., LTD., Tokyo 145-8501 (JP)
(72) Inventor: Yamada, Tatsuya, Alps Electric Co,. Ltd., Tokyo, 145-8501 (JP)
(74) Representative: Klunker . Schmitt-Nilson . Hirsch

(57) **Abstract**

A control device for electrical appliances is provided with a nonvolatile rewritable memory for storing a program, and mounted with a microcomputer for controlling electrical appliances in accordance with the program stored in the rewritable memory and a watchdog timer for monitoring a clear pulse generated by the microcomputer and, if the clear pulse is not received within a prescribed period, supplying a reset pulse to the microcomputer. The control device for electrical appliances is further provided with a memory write terminal for writing the program from outside into the nonvolatile rewritable memory and a pseudo-clear pulse supply terminal for supplying a pseudo-clear pulse approximating the clear pulse to the watchdog timer.

## Description

### BACKGROUND OF THE INVENTION

### 1. Field of the Invention

The present invention relates to a control device for electrical appliances and a method of writing an application program into the control device, and more particularly to a control device mounted with a watchdog timer circuit for electrical appliances, and a method of writing an application program into the control device.

### 2. Description of the Related Art

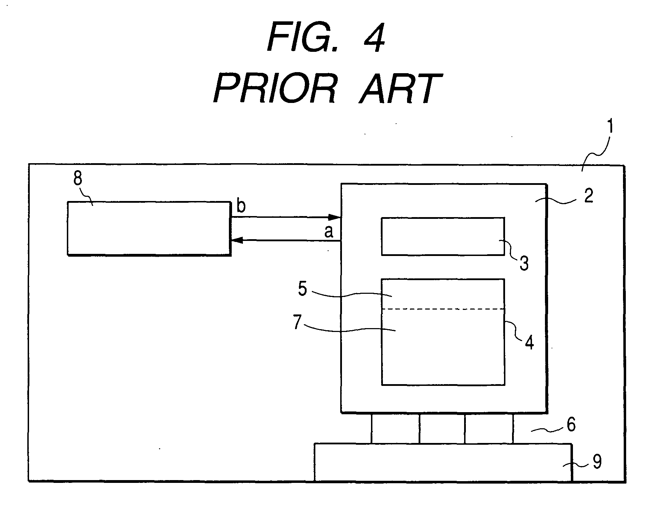

Fig. 4 illustrates a watchdog timer-equipped control device for electrical appliances according to the prior art. The control device can be used for controlling, for instance, vehicle-mounted appliances such as an air conditioner. In Fig. 4, reference numeral 1 denotes a printed circuit board for mounting the control device; 2, a computer such as a one-chip microcomputer; 3, a CPU (which constitutes a control unit); 4, a nonvolatile rewritable memory, such as a FRASH-RAM; 5, a boot program recording area of the rewritable memory 4, the area being intended for storing a program for reading in an application program or a program for invalidating an action to reset the watchdog timer; 6, wiring for connecting the microcomputer to a connector 9 to be described afterwards; 7, an application program recording area in the rewritable memory 4, the area being intended for storing, for instance, a program for storing a temperature regulating program or an air flow rate regulating program for a vehicle-mounted air conditioner; and 8, a watchdog timer, externally fitted to the microcomputer 2, for constantly watching whether or not the CPU is normally operating, the watchdog timer receiving a clear pulse a periodically generated by the microcomputer, for instance, and forcibly resetting the microcomputer 2 by generating a the reset pulse b when it becomes no longer possible to receive the clear pulse a. By virtue of this function, the watchdog timer 8 can, in the event of any trouble arising in the program of the microcomputer, restart the microcomputer 2 to continue control. Reference numeral 9 denotes a connector (terminal) for external connection. Via this connector 9, the microcomputer 2 can take in an application program from outside and write (download) it into the rewritable memory 4. The microcomputer 2 also controls external appliances to be controlled (an air conditioner and the like) via the connector 9. Thus, units mounted on the printed circuit board 1, including the microcomputer 2, function together as a control device to control external appliances which are objects of control (an air conditioner and the like).

Next will be described the manufacturing procedure of the control device for electrical appliances shown in Fig. 4. First, a microcomputer in which no program is written (blank microcomputer) 2 is made ready, and a boot program is written into the microcomputer 2. The boot program, as described above, is a program for reading application programs or a program for invalidating any reset action by the watchdog timer 8, and writes these programs into a ROM writer or the like. These programs differ with the type of the microcomputer 2, and therefore have to be developed for each type of the microcomputer 2 used. The programs can be written either on the production line or by the manufacturer of the microcomputer.

The microcomputer 2 into which the programs have been written, the watchdog timer 8 and the connector 9 are mounted on a printed circuit board (printed-wiring board) 1, and the microcomputer 2, the watchdog timer 8 and the connector 9 are connected to one another by the wiring formed on the printed circuit board 1.

Then a personal computer in which the application program, for instance, is stored is connected via the connector 9, and the boot program which has been written is actuated to take in the application program stored in the personal computer and write (download) it into the writable memory 4.

Incidentally the watchdog timer 8, which is externally connected to the microcomputer 2, is set to usually receive a clear pulse a periodically generated by the microcomputer 2 as stated above and, when the clear pulse a can no longer be received, to generate the reset pulse b to forcibly reset the microcomputer 2. For this reason, by causing the program for reading in the application program to be executed after reading in the boot program to invalidate the reset action by the watchdog timer 8 and the program for reading in the application program, it is made possible to avoid resetting of the microcomputer 2 by an unnecessary action by the watchdog timer 8.

The microcomputer 2 having taken in the application program and written it into the writable memory 4 can thereafter operate as a control device. For instance, it can control a vehicle-mounted air conditioner, connected to it via the connector 9, to regulate the interior temperature, the air flow rate and so forth.

As stated above, manufacturing a microcomputer-based control device for electrical appliances according to the prior art requires (1) development of a boot program, (2) writing the boot program on the production line or by the microcomputer manufacturer, (3) mounting of a microcomputer, a watchdog timer, a connector and so forth on the printed circuit board, and (4) writing the application program into the microcomputer mounted on the printed circuit board.

The boot program used in (1) development of a boot program and (2) writing the boot program on the production line or by the microcomputer manufacturer mentioned above is a program for reading in the application program or a program for invalidating a reset action by the watchdog timer.

For this reason, after writing in (downloading) the application program by use of the boot program, the application program that has been written in will operate, but the boot program will not.

To add, the boot program needs to be developed anew for the particular type of the microcomputer to be used as described above, and its development consumes a large amount of labor. Furthermore, development of the boot program and its writing into the microcomputer entails considerable clerical or process management loads.

### SUMMARY OF THE INVENTION

An object of the present invention is to provide a control device for electrical appliances that can be manufactured in a short period of time and at low cost by reducing the required workloads of developing a boot program or writing in the boot program, and a method of writing an application program into the control device.

The invention uses the following means in order to solve the problems noted above.

It is a control device for electrical appliances provided with a nonvolatile rewritable memory for storing a program, and mounted with a microcomputer for controlling electrical appliances in accordance with the program stored in the rewritable memory and a watchdog timer for monitoring a clear pulse generated by the microcomputer and, if the clear pulse is not received within a prescribed period, supplying a reset pulse to the microcomputer, the control device for electrical appliances being further provided with a memory write terminal for writing the program from outside into the nonvolatile rewritable memory and a pseudo-clear pulse supply terminal for supplying a pseudo-clear pulse approximating the clear pulse to the watchdog timer.

### BRIEF DESCRIPTION OF THE DRAWINGS

Fig. 1 illustrates a control device for electrical appliances, which is a first preferred embodiment of the present invention;
Fig. 2 illustrates the manufacturing procedure of the control device for electrical appliances shown in Fig. 1;
Fig. 3 illustrates a control device for electrical appliances , which is a second preferred embodiment of the present invention; and
Fig. 4 illustrates a control device for electrical appliances according to the prior art.

### DETAILED DESCRIPTION OF THE PREFERRED EMBODIMENT

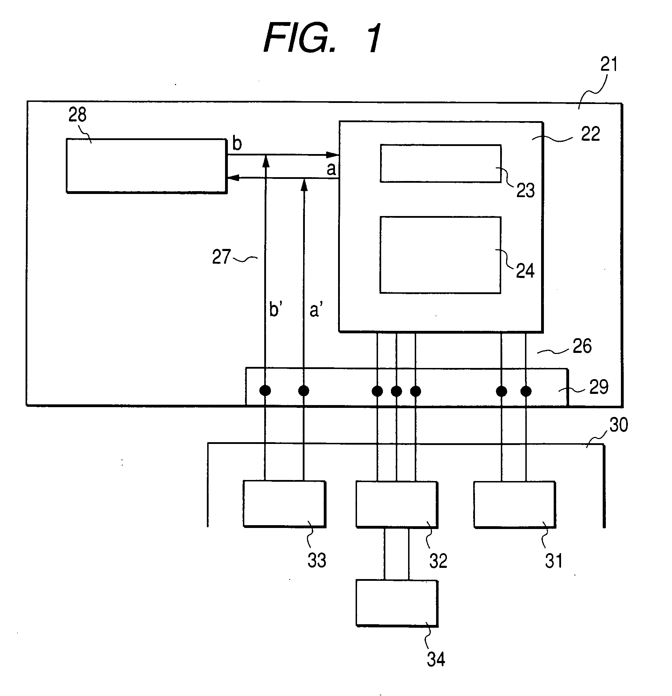

Preferred embodiments of the present invention will be described below With reference to accompanying drawings. Fig. 1 illustrates a control device for electrical appliances, which is a first preferred embodiment of the invention. The control device is used for controlling vehicle-mounted electrical appliances such as an air conditioner, for instance. In Fig. 1, reference numeral 21 denotes a printed circuit board for mounting the control device, and 22, a computer such as a one-chip microcomputer, provided with a CPU 23 (which constitutes a control unit) and a rewritable memory 24, such as a FLASH-RAM. The rewritable memory 24 has an application program recording area, in which is stored, for instance, a temperature regulating program or an air flow regulation program for a vehicle-mounted air conditioner. Reference numeral 26 denotes wiring for connecting the microcomputer 22 and a connector 29 to be described afterwards; 27, signal lines for supplying a clear pulse a to a watchdog timer 28 to be described afterwards and a reset pulse b to the microcomputer 22; and 28, a watchdog timer externally connected to the microcomputer 22 for constant monitoring to check whether or not the CPU 23 is normally operating, receiving for instance the clear pulse a periodically generated by the microcomputer 22 and, when the clear pulse a can be no longer received, generating the reset pulse b to forcibly reset the microcomputer 22. By virtue of this function, the watchdogtimer 28, in the event of any trouble arising in the program of the microcomputer, can restart the microcomputer 22 to let the control operation continue. Reference numeral 29 denotes a connector for external connection, via which the microcomputer 22 can take in an application program from outside and write (download) it into a writable memory. The microcomputer 22 can control external objects of control (including an air conditioner) through the connector 29. Devices mounted on the printed circuit board 21, including the microcomputer 22, function together as a control device to control the objects of control (including an air conditioner) . They can also take in, as will be described afterwards, mode switching signals for switching the operating mode and pseudo-pulses generated by pseudo-pulse generating means.

Reference numeral 31 denotes a mode switcher for switching the operating mode (among the external write mode, the control mode to have the switch operate as a control device and so forth) of the microcomputer 22; 32, a serial interface for supplying the microcomputer 22 with serial write data fed from outside (an application program or the like) and supplying outside the output of the microcomputer 22 as serial data; and 33, pseudo-pulse generating means for generating a pseudo-clear pulse a' for invalidating the resetting action of the watchdog timer 28 and a forced reset pulse b' for forcibly resetting the microcomputer 22. The forced reset pulse b' can be used, for instance, as a trigger signal for taking in an application program from outside and writing it into a writable memory. Reference numeral 34 denotes a personal computer in which an application program is stored and which writes the application program into the rewritable memory 24 via the serial interface 32. The personal computer and the serial interface 32 are connected to each via serial communication interface (SCI). The connection terminals for the mode switcher 31, the serial interface 32 and the pseudo-pulse generating means 33 are connected in advance to an adaptor 30 which is plugged in to the connector 29. Preparing this configuration makes it possible, as will be described afterwards, to write sequentially and promptly application programs into a plurality of rewritable memories 24 (a plurality of printed circuit boards) by merely changing successively the adaptor 30 connected to the connector 29.

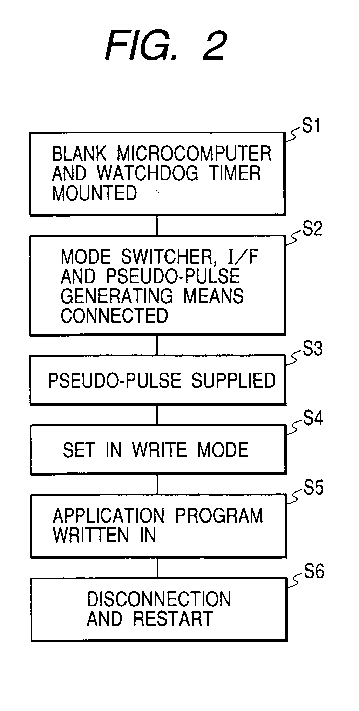

Next will be described with reference to Fig. 2 the manufacturing procedure of the control device for electrical appliances shown in Fig. 1. First, a microcomputer 22 in which no program is written (blank microcomputer 22) is made ready.

Then, the blank microcomputer 22, the watchdog timer 28 and the connector 29 are mounted on the printed circuit board (printed-wiring board) 21, and the microcomputer 22 , the watchdog timer 28 and the connector 29 are connected to one another by way of the wiring formed on the printed circuit board 21 (step 1).

Then, the adaptor 30 is plugged in to the connector 29, and the mode switcher 31, the serial interface 32 and the pseudo-pulse generating means 33 are connected to the control device (i.e. to the microcomputer 22) (step 2).

Next, the power sources of the devices on the control device side and on the adaptor side are turned on, and the pseudo-clear pulse a' generated by the pseudo-pulse generating means 33 is supplied to the watchdog timer 28. This makes it possible to invalidate the resetting action of the watchdog timer 28 (step 3).

While the pseudo-clear pulse a' is being supplied to the watchdog timer 28, the mode switcher 31 is operated to switch the mode of the microcomputer 22 to the write mode (step 4). Further, the application program stored in the personal computer 34 is written into the rewritable memory 24 via the serial interface 32 (step 5).

When the writing of the application program is completed, the two power sources are turned off, and the adaptor 30 is unplugged from the connector 29. When the power source on the control device side (the microcomputer 22 side) is turned on again, the microcomputer 22 having taken in the application program and written it into the writable memory 24 thereafter becomes operable as a control device and controls, for instance, the vehicle-mounted air conditioner connected via the connector 29 to regulate the interior temperature, air flow rate or the like (step 6).

As described above, this embodiment of the present invention does not require (1) development of a boot program or (2) writing the boot program on the production line or by the microcomputer manufacturer which the prior art would require as described earlier, but permits direct writing of an application program into a blank microcomputer (blank microcomputer) 22. Moreover, by merely changing successively the adaptor 30 connected to the connector 29, any desired application program can be written into the rewritable memory 24 of any desired control device. For this reason, flexibility is ensured at the application program writing step in the manufacturing process of the control device or in the application program rewriting process for a vehicle already mounted with the control device.

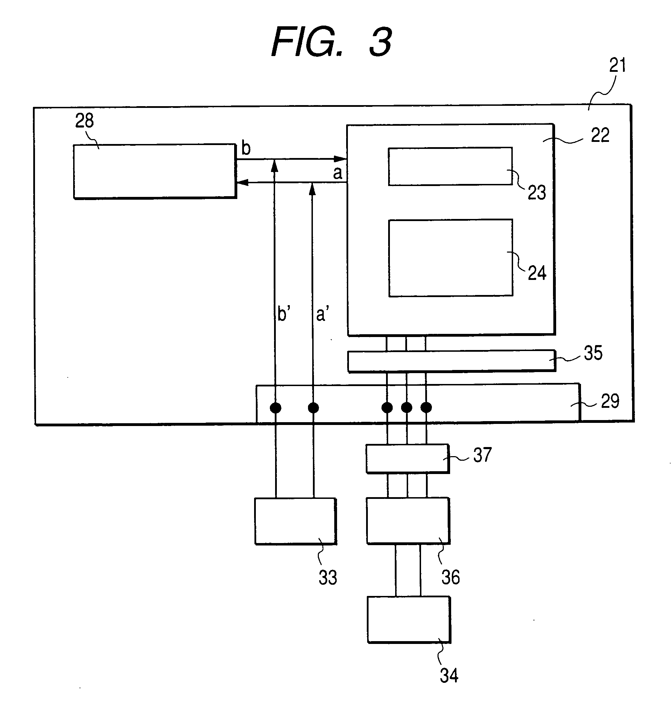

Fig. 3 illustrates a control device for electrical appliances, which is a second preferred embodiment of the invention. In Fig. 3, reference numeral 35 denotes a Controller Area Network (CAN) transceiver, and 36, a CAN serial interface. The same constituent elements as their counterparts in Fig. 1 are represented by respectively the same reference signs, and their description is dispensed with.

The CAN is an interface standard for a LAN which can cover the whole interior of a motor vehicle, and features a highly flexible and low-cost configuration. The CAN further is able, for instance, to multiplex application program write signals and mode switching signals for the mode switcher supplied via the CAN serial interface 36 and to supply the multiplexed signals to the microcomputer 22. Thus it can supply the mode switching signals from the personal computer 34 to the microcomputer 22 via the CAN serial interface 36, the CAN transceiver 37, the connector 29 and the CAN transceiver 35. For this reason, there is no need for a mode switcher. Furthermore, the connecting line from the CAN transceiver 37 to the CAN transceiver 35 is the communication bus for the in-vehicle LAN.

As described above, this embodiment of the invention can reduce the workloads of (1) development of a boot program or (2) writing the boot program because the writing of any boot program is dispensed with. Accordingly, as a result of the abolition of these steps, managerial work to manage these steps can also be dispensed with.

As hitherto described, according to the present invention, a control device for electrical appliances that can be manufactured in a short period of time and at low cost by reducing the required workloads of developing a boot program or writing into the boot program, and a method of writing an application program into the control device can be provided.

## Claims

1. A control device for electrical appliances provided with a nonvolatile rewritable memory (24) for storing a program, and mounted with a microcomputer (22) for controlling electrical appliances in accordance with the program stored in the rewritable memory (24) and a watchdog timer (28) for monitoring a clear pulse generated by the microcomputer and, if the clear pulse is not received within a prescribed period, supplying a reset pulse to the microcomputer,
the control device for electrical appliances being further provided with a memory write terminal (29) for writing the program from outside into the nonvolatile rewritable memory (24) and a pseudo-clear pulse supply terminal (29) for supplying a pseudo-clear pulse approximating the clear pulse to the watchdog timer (28).

2. A method of writing an application program into a control device for electrical appliances provided with a nonvolatile rewritable memory (24) for storing a program, and mounted with a microcomputer (22) for controlling electrical appliances in accordance with the program stored in the rewritable memory (24) and a watchdog timer (28) for monitoring a clear pulse generated by the microcomputer and, if the clear pulse is not received within a prescribed period, supplying a reset pulse to the microcomputer,
the application program writing method including a step of supplying a pseudo-clear pulse approximating the clear pulse to the watchdog timer (28) and a step of writing the application program from outside into the nonvolatile rewritable memory (24).

3. The method of writing an application program into a control device for electrical appliances, according to Claim 2, wherein the nonvolatile rewritable memory (24) is a memory in which no data is recorded, and wherein the application program is written into the memory.
